# NEUE EUROPÄISCHE PATENTSCHRIFT

(11) **EP 0 854 478 B2**
(45) Veröffentlichungstag und Bekanntmachung des Hinweises auf die Entscheidung über den Einspruch: **06.08.2014**
(45) Hinweis auf die Patenterteilung: 19.06.2002
(21) Anmeldenummer: 98100623.2
(22) Anmeldetag: 15.01.1998
(51) Int. Cl.: G11B 15/02, G11B 15/03

(54) **Aufzeichnungs- und/oder Wiedergabegerät für Audio- und/oder Videosignale**
Recording and/or reproducing device for audio and/or videosignals
Appareil d'enregistrement et/ou de reproduction de signaux audio et/ou vidéo

(30) Priorität: 15.01.1997 DE 19701151
(43) Veröffentlichungstag der Anmeldung: 22.07.1998
(73) Patentinhaber: IGR GmbH & Co. KG., 40210 Düsseldorf (DE)
(72) Erfinder: Heller, Ulrich, 56470 Bad Marienberg (DE)
(74) Vertreter: Pröll, Jürgen

(56) Entgegenhaltungen:
- EP-A2- 0 401 930
- WO-A-97/36295
- DE-A- 4 234 840
- US-A- 5 353 121
- US-A- 5 430 552
- PATENT ABSTRACTS OF JAPAN vol. 018, no. 379 (P-1771), 15.Juli 1994 & JP 06 103640 A (SONY CORP), 15.April 1994,
- PATENT ABSTRACTS OF JAPAN vol. 015, no. 338 (P-1243), 27.August 1991 & JP 03 125356 A (MATSUSHITA ELECTRIC IND CO LTD), 28.Mai 1991,

## Beschreibung

Die vorliegende Erfindung betrifft ein Aufzeichnungs- und/oder Wiedergabegerät für Audio- und/oder Videosignale, welches einen Timer für Programmwunsch-Aufzeichnungen und/oder -Wiedergabe enthält, gemäß dem Oberbegriff des Anspruch 1.
Beispielsweise sind Tonaufzeichnungsgeräte oder Videorecorder bekannt, die einen Timer als programmierbare Schaltuhr besitzen, um zu voreinstellbaren Zeitpunkten eine beliebige Radiooder Fernsehsendung automatisch aufzeichnen zu können. Der Timer enthält einen Speicher mit mehreren Speicherplätzen, um mehrere Sendungen aufzeichnen zu können. In diese Speicherplätze werden Timereinstelldaten eingegeben, indem der Programmplatz, der Tag und die Uhrzeit als Start- und gegebenenfalls Stoppzeit für den aufzuzeichnenden Sendebeitrag eingegeben werden. Auch können weitere Informationen hinzugefügt werden, beispielsweise ob die Sendung mit oder ohne VPS-Überwachung aufgezeichnet werden soll oder nicht. Ebenso können die Daten vereinfacht als Codeziffer aus Zeitschriften, oder als Menüauswahl aus dem Videotext Verfahren (VPT) aufgezeichnet werden.

Sobald ein in dieser Art vorprogrammierter Sendebeitrag aufgezeichnet worden ist, wird der betreffende Speicherplatz gelöscht, so daß alle mühsam eingegebenen Timereinstelldaten verloren gehen. Das ist bei einmalig aufzuzeichnenden Sendebeiträgen auch erwünscht.

Daneben gibt es auch Timer, die es erlauben, mit einmal einprogrammierten Daten Sendebeiträge wiederholt aufzuzeichnen. Sie sind als "Every-Day"- und "Every-Week"-Moden bekannt. Der "Every-Day"-Modus erlaubt es, täglich zur gleichen Zeit ein bestimmtes Programm aufzuzeichnen. Der "Every-Week"-Modus erlaubt das Aufzeichnen einer bestimmten Sendung, die sich immer am gleichen Wochentag zur gleichen Zeit wiederholt.

Ein Aufzeichnungsgerät mit einem solchen Timer ist beispielsweise in der Bedienungsanleitung von Metz zum Videorecorder 9842, Seiten 18 - 26, Bestellnummer 96480-452, aus dem Jahre 1993 beschrieben. Dort ist ein gemeinsamer Speicher mit insgesamt 8 Speicherplätzen vorhanden, die wahlweise einmalige, tägliche oder wöchentliche Timereinstelldaten aufnehmen können. Die Speicherplätze, welche Wiederholungsdaten enthalten, bekommen eine Zusatzinformation zugewiesen, wodurch die Art der Wiederholung (täglich oder wöchentlich) erkannt wird und die eingeschriebenen Daten vor dem Löschen nach erfolgter Aufzeichnung geschützt werden.

Die so gewählten Einstelldaten blockieren allerdings einen Teil des Gesamtspeichers und begrenzen damit die Möglichkeit verschiedener individueller Einstellungen. Wählt man beispielsweise drei wöchentliche und zwei tägliche Einstelldaten, sind diese Plätze bis zur Änderung dauerhaft belegt und es bleiben nur 3 Plätze für einmalige individuelle Timerwünsche übrig.

Ein weiterer Nachteil dieser vorbekannten täglichen und wöchentlichen Wiederholungseinstellungen ist die unflexible Auswahl einer oder mehrerer dieser Einstellungen für eine einmalige Aufzeichnung. Zunächst sind die wiederholbaren Einstellungen immer an einen bestimmten Tag mit gleicher Zeit gebunden und führen zu wiederholten und fortlaufenden Aufzeichnungen zu den gewählten Zeitpunkten, wenn der Recorder nicht rechtzeitig manuell ausgeschaltet wird. Sind außerdem mehrere Programmbeiträge in einem "Every-Week"-Modus vorprogrammiert, ist es nicht möglich, daraus nur einen Beitrag einzeln auszuwählen und aufzeichnen zu lassen, ohne die anderen "Every-Week"-Einstelldaten zu löschen oder diese Daten einzeln manuell einzugeben.

Demgegenüber liegt der vorliegenden Erfindung die Aufgabe zugrunde, Timereinstelldaten eines Aufzeichnungsgerätes der eingangs genannten Art für Sendebeiträge von wiederkehrenden Sendezeiten auf einfache Weise auszuwählen und jeweils einer einmaligen timergesteuerten Aufzeichnung zur Verfügung zu stellen.
Diese Aufgabe wird durch die Merkmale nach Ansprüch 1 gelöst.

Mit Hilfe der vorliegenden Erfindung hat der Benutzer die vorteilhafte Möglichkeit, ausgewählte Fernseh- oder Hörfunksendebeiträge mit wiederkehrenden Sendezeiten kurzfristig ohne Mühe einmalig aufzuzeichnen zu lassen. Ebenso können bekannte Sendebeiträge, die gelegentlich zu unterschiedlichen Zeiten ausgestrahlt werden, mit wenigen und einfachen Handgriffen aufgezeichnet werden, indem der Benutzer aus einer Datenbank mit Timereinstelldaten die aktuell einmalig benötigte Zeit auswählt und dem Timer zur automatischen Aufzeichnung zur Verfügung stellt.

Möchte der Benutzer beispielsweise eine Sendefolge der seit vielen Jahren im deutschen ARD-Fernsehprogramm laufenden "Sendung mit der Maus" aufzeichnen, kann er einen ersten Speicherplatz des vom üblichen Timerspeichers unabhängigen weiteren Speichers (nachfolgend Archivspeicher genannt) mit den regulären, sich wiederholenden Einschaltzeiten belegen: Startzeit 11.30 Uhr, Stoppzeit 12.00 Uhr. Gelegentlich wird die Sendung auf 9.30 Uhr vorverlegt. Hier kann man in einem weiteren Speicherplatz des Archivspeichers folgende Zeiten ablegen: Startzeit 9.30 Uhr, Stoppzeit 10.00 Uhr. Bei Bedarf können diese weiteren Einschaltzeiten neben den regulären gezielt aufgerufen werden, indem der zweite Speicherplatz des Archivspeichers ausgewählt wird. Auch andere Sendungen, wie der z.B. der gewöhnliche "Sonntags-Abend-Krimi" haben feststehende sich immer wiederholende Sendezeiten, z.B. von 20.15 Uhr bis 21.45 Uhr.

Derartige Sendebeiträge sind dem Benutzer wohlbekannt. Er hat gegenüber den "Every-Day"- und "Every-Week"-Moden die Möglichkeit, zu entscheiden, ob er dieses Mal einen Sendebeitrag oder mehrere Sendebeiträge einmalig aufzeichnen möchte oder nicht. Dabei kann er eine Auswahl aus mehreren Sendebeiträgen bzw. Sendezeiten vornehmen. Die Vielzahl der Sendezeiten ist nur durch die Größe des Archivspeichers begrenzt. Die Größe des ersten Speichers 3 für übliche Timereinstelldaten wird davon nicht beeinflußt.

Die wenigen, notwendigen Tastenbetätigungen erlauben es dem Benutzer in vorteilhafter Weise, sich kurzfristig zu einer automatischen Aufzeichnung zu entschließen und den Timer ohne großen Aufwand "scharf", d.h. in Aufzeichnungsbereitschaft zu schalten. Die umständliche Programmierung, wie sie für die gewöhnliche einmalige Timereinstellung üblich ist, entfällt. Außerdem werden die Sendezeiten im Archivspeicher nach ausgeführten Timeraufträgen nicht gelöscht.

Weitere Vorteile, Merkmale und Weiterbildungen der Erfindung werden nachfolgend anhand der Zeichnungen an einem Ausführungsbeispiel gemäß der Erfindung erläutert. Dabei zeigen
Fig. 1 eine vereinfachte Timerschaltung nach dem Stand der Technik,
Fig. 2 ein erfindungsgemäßes Ausführungsbeispiel.

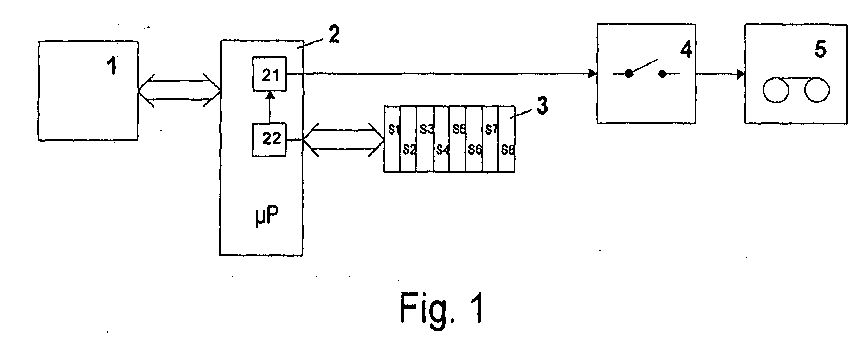

Die Figur 1 zeigt eine Tastatur 1, welche einen Mikroprozessor 2 steuert. Der Mikroprozessor verwaltet mit Hilfe einer internen Schaltung 22 einen ersten Speicher 3, welcher acht Speicherplätze (S1 bis S8) aufweist. In diese Speicherplätzen werden die üblichen Timereinstelldaten, wie oben beschrieben, abgelegt.

Die Timereinstelldaten werden von der Schaltung 22 überwacht und bei Eintreffen des Zeitereignisses über eine Ausgangsstufe 21 an einen Timerschalter 4 geleitet, welcher den Aufnahmevorgang in Block 5 steuert.

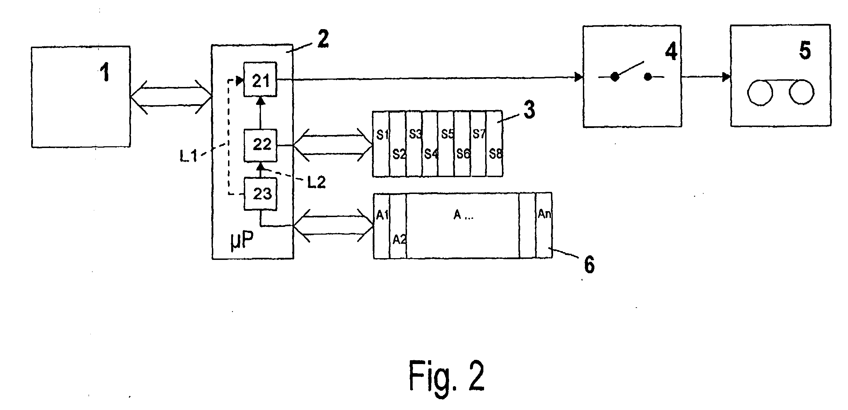

Die Figur 2 enthält zunächst die gleichen Schaltungsblöcke 1 - 5 wie Figur 1. Sie zeigt überdies einen zweiten Speicher 6 (Archivspeicher), welcher eine Mehrzahl von Speicherplätzen (A1...An) enthält und welcher ebenfalls vom Mikroprozessor 2 verwaltet wird, in diesem Falle von einer internen Schaltung 23. Die im Archivspeicher 6 abgelegten Timereinstelldaten sind unabhängig von denen des ersten Speichers 3. Eine Leitungsverbindung L2 zwischen den Blöcken 22 und 23 deutet an, daß die gewählten Timereinstelldaten des Archivspeichers 6 durch eine erste gesonderte Tastenbetätigung in den ersten Speicher 3 transferiert werden können und von hier über den Block 22 und die Ausgangsstufe 21 den Timerschalter 4 steuern. Ebenso können die gewählten Daten aus dem Archivspeicher 6 aber auch unter Umgehung des Speichers 3 an den Timerschalter 4 geführt werden, wie eine gestrichelt dargestellte Leitung L1 zwischen dem Block 23 und der Ausgangsschaltung 21 andeutet.

Mit Hilfe der Tastatur 1 kann der Benutzer wie üblich gewöhnliche Timereinstelldaten einprogrammieren, die dann im ersten Speicher 3 abgelegt und zur Zeitschaltung vorgesehen werden. Möchte er hingegen wiederkehrende Timerdaten eingeben, die er bei Gelegenheit aus einem geeigneten und vom ersten Speicher unabhängigen Datenarchiv spontan aufrufen kann, muß er dies dem Speicherverwalter (hier Mikroprozessor 2) über eine zweite gesonderte Tastenbetätigung mitteilen. Der Mikroprozessor öffnet dem Benutzer den Weg in den Archivspeicher 6, wo nun beliebige Timereinstelldaten in die Speicherplätze (A1...An) hinzugefügt, editiert, gespeichert oder gelöscht werden können.

Die gesonderten Tastenbetätigungen könnten beispielsweise folgende Tastenbefehlsschritte beinhalten:
1. Betätigen einer Sondertaste, z. B. Archivtaste genannt (der Archivspeicher 6 wird durch Block 23 aktiviert).
2. Auswahl einer Speicherplatznummer, beispielsweise durch Direktwahl einer Nummer (der entsprechende Speicherplatz (A1...An) wird gewählt).
3a. Aktivieren einer Bestätigungstaste (der Mikroprozessor 2 stellt den Speicherinhalt des gewählten Speicherplatzes dem Timer 2,3,4 zur Verfügung) oder
3b. Aktivieren einer gesonderten Taste, wenn der Speicherinhalt editiert werden soll.

Sind die wiederkehrenden Timereinstelldaten im Archivspeicher 6 erst einmal eingegeben, ist es durch drei Tastenbetätigungen äußerst einfach, einen Sendebeitrag, dessen Zeiten dem Benutzer wie oben erläutert bekannt sind, automatisch aufzeichnen zu lassen.

Sind mehrere Speicherplätze (A1...An) vorhanden, ist es auch möglich, mehrere Einschaltzeiten dem Timer zur Verfügung zu stellen, die dieser dann hintereinander abarbeitet. Hierzu sind lediglich die vorstehend erläuterten Tastenbetätigungs-Schritte 1-3 zu wiederholen.

Die erfindungsgemäße Ausführung für die gesonderte Tastenbetätigung muß sich nicht auf separate Tasten, z.B. eine Archivund eine Bestätigungstaste, beschränken. Gleichermaßen können für die nötigen Befehle auch vorhandene Tasten mit Mehrfachfunktion verwendet werden. So könnte längeres Drücken einer geeigneten Taste, oder kurz hintereinanderfolgendes Doppeldrücken oder eine mechanische Umschaltung der Taste eine der Archivfunktionen einleiten sowie beenden.

In einer Weiterbildung der Erfindung ist es auch möglich, die zuletzt gewählten Timereinstelldaten von der Bereitstellung zurückzunehmen. Drückt man beispielsweise nach Auswahl der Daten ein weiteres Mal die Bestätigungstaste, drückt sie mehrfach kurz oder hält sie länger gedrückt, kann die zuletzt gewählte Auswahl rückgängig gemacht werden. Damit ist dem Benutzer eine einfache Korrekturmöglichkeit gegeben, falls er sich bei der Auswahl der Timereinstelldaten vertan hat.

Natürlich kann man den Archivspeicher vereinfachen und nur einen gesonderten Speicherplatz A1 vorsehen, dabei kann auch die Tastenbetätigung auf eine Taste reduziert werden, indem man die Archivtaste kurz drückt. Unmittelbar nach Betätigung dieser einen Taste kann der Timer mit den im Archivspeicher vorgesehenen Timereinstelldaten aktiv werden. Ein längeres Drücken der Archivtaste könnte einen Editiervorgang des Speicherplatzes einleiten.

Ist nur ein gesonderter Speicherplatz A1 vorhanden, ist es weiterhin möglich, die Timeraktivierung mit zwei Schritten, nämlich die Schritte 1 und 3 (a oder b), auszuführen.

Sind mehrere Archiv-Speicherplätze (A1...An) vorhanden, kann die Auswahl in Schritt 2 auf verschiedenartige Weise erfolgen. Wird die Direktwahl einer Nummer, z.B. Taste 3 für Speicherplatz 3, angewandt, müssen neben den Start- und gegebenenfalls Stoppzeiten die zugehörigen Sender beim Belegen des Archivspeichers festgelegt sein. So würden im Archiv-Speicherplatz A3 für die "Sendung mit der Maus" sinnvollerweise folgende Timereinstelldaten abgelegt sein:
- Sender : ARD (Programmplatz 1)
- Wochentag : Sonntags
- Startzeit : 11.30 Uhr
- Stoppzeit : 12.00 Uhr
- Steuersignal: VPS

Eine weitere Voreinstellung könnte das meistgewünschte Abendprogramm auswählen:
- Sender : ZDF
- Wochentag : -
- Startzeit : 20.15 Uhr
- Stoppzeit : 21.45 Uhr
- Steuersignal: VPS

Die Auswahl des Speicherplatzes kann blind erfolgen (Archivierungstaste, Speicherplatztaste, Enter), wenn der Benutzer die Archivierung von bekannte Sendezeiten auf ein überschaubares Maß beschränkt, sie kann aber auch von einer Kontrollanzeige begleitet sein, die seinem Gedächtnis hilft.

Die Anzeige kann auf einem beliebigem Display, beispielsweise direkt auf der Fernbedienung oder als OSD (On Screen Display) oder Vollbild auf dem Bildschirm erfolgen, sie kann die abgelegten Zeiten und/oder alphanumerische Merkhilfen darstellen. Die Merkhilfen können vom Benutzer eingegebene Hinweise sein, z.B. "Maus" oder "Ziehung der Lottozahlen". Aus diesen dem Menschen entgegenkommenden Begriffen kann der Benutzer dann seine gewünschte Sendung auswählen, ohne daß er die exakten Start- und Stoppzeiten der Sendung zur Hand haben muß.

So ist neben der Direktnummernwahl auch eine menüartige Auswahl des Archiv-Speicherplatzes möglich. Dies ist besonders dann nützlich, wenn der Benutzer den Sender bzw. Programmplatz individuell wählen möchte. Anschließend kann er dem gewählten Sender (z.B. ARD oder ZDF) eine im Menü vorhandene bekannte, wiederkehrende Sendezeit (z.B. 20.15 Uhr) zuweisen.

In diesem Falle werden im Archivspeicher 6 die Schaltsignale für die Senderwahl nicht abgelegt, sondern nur die Schaltzeiten, wenigstens die Startzeit. Es kann auch ausreichend sein auf die Ausschaltzeit zu verzichten und nur noch die Einschaltzeit anzugeben, wenn sichergestellt ist, daß das Aufzeichnungsgerät mit einem Programmkennungssignal, wie beispielsweise das VPS-Signal, automatisch für die Ausschaltung zum rechten Zeitpunkt sorgt. Auch ist es möglich, wahlweise auf unnötige Datumseingaben bzw. Tagesangaben (z.B. übermorgen oder Sonntag) zu verzichten. Wird nur die Einschalt- und eventuell noch die Ausschaltzeit eingegeben, wird bei Aktivierung dieser Einstellung der Timer die nächstliegende Sendung mit der gewünschten Zeit aufzeichnen.

Bei der Menüwahl sind allerdings mehrere Tasten zu betätigen, z.B. fünf:
1. Betätigen der Archivtaste (leitet das Benutzen des Archivspeichers 6 ein).
2. Wahl des aufzuzeichnenden Senders durch eine entsprechende Zifferntaste (z.B. "2" für ZDF)
3. Bestätigungstaste (Enter)
4. Auswahl einer passenden Sendezeit (z.B. 20.15 Uhr), die in einem der Archiv-Speicherplätze abgelegt sind, z.B. mit einer weiteren Nummerntaste.
5. Bestätigungstaste (Enter). Der gewählte Sender und die Sendezeit werden zusammengefügt und automatisch der Timerschaltung (2,3,4) zugeführt.

Ein weiteres Anwendungsbeispiel, in der eine menüartige Tastenbetätigung vorteilhaft ist, ergibt sich, wenn der Benutzer einen ersten Sendebeitrag, dessen bekannte Zeit im Archiv-Speicherplatz (A3) abgelegt ist, heute sowie einen weiteren Sendebeitrag mit gleicher (Speicherplatz A3) oder einer anderen bekannten Zeit (Speicherplatz A4) beispielsweise zwei Tage später, aufzeichnen möchte. So wählt er für den weiteren Sendebeitrag am zweiten Tag (Nummerntaste "2") den vierten Speicherplatz (Nummerntaste "4"). Die Tastenbetätigung kann vergleichbar wie im letzten Beispiel bei der freien Senderwahl ablaufen. Die Reihenfolge der Nummerntastenwahl für Tag und Speicherplatz kann selbstverständlich vertauscht werden: Die vierte, archivierte Sendezeit (Nummerntaste "4") am zweiten Tag (Nummerntaste "2") oder am zweiten Tag (Nummerntaste "2") die vierte, archivierte Sendezeit (Nummerntaste "4").

Wird eine Kontrollanzeige verwendet, kann die Menüauswahl auch durch Kombination einer Cursortaste oder einer Schritt-Taste mit einer Bestätigungstaste erfolgen.

In einer Weiterbildung der Erfindung ist es möglich, den Speicherplatz statt mit Nummerntasten durch direkte Eingabe der bekannten Startzeit anzuwählen.

In einer anderen Weiterbildung der Erfindung ist es vorgesehen, den Timereinstelldaten des Archivspeichers 6 eine Priorität vor eventuell sich überschneidenden Timereinstelldaten des ersten Speichers 3 zu sichern. Das ist besonders dann nützlich, wenn der Wunsch eine bekannte Sendung aufzuzeichnen, sehr spontan ist und im Augenblick als sehr wichtig angesehen wird.

Bei einem weiteren Ausführungsbeispiel der Erfindung kann vorgesehen sein, daß bei Aufruf des mindestens einen weiteren Speicherplatzes An dessen Timereinstelldaten Priorität vor solchen Timereinstelldaten des ersten Speichers 3 oder Speicherbereiches haben, die nicht aus einem der weiteren Speicherplätze An aufgerufen werden.

Unabhängig davon kann vorgesehen sein, daß die Timereinstelldaten des weiteren unabhängigen Speichers 6 auf die Tagesangabe oder Datumsangabe verzichten und lediglich Uhrzeiten für die nach Bereitstellung der Einstelldaten folgenden gewählten Sendung aufweisen.

Bei einem weiteren Ausführungsbeispiel kann vorgesehen sein, daß die Auswahl und Bereitstellung des unabhängigen Speicherbereiches mit Hilfe der Eingabe der gewünschten Startzeit erfolgt.

Unabhängig davon kann vorgesehen sein, daß bei Aktivieren der gesonderten Tastenbetätigung eine Anzeigefunktion ausgelöst wird, die vorbestimmbare alphanumerische Zeichen zur Kenntlichmachung der auswählbaren Timereinstelldaten anzeigt.

Die vorliegende Erfindung befreit den Benutzer von viel Ballast, die eine übliche Timerprogrammierung mit sich bringt und ermöglicht es ihm, mit Hilfe einer äußerst einfachen Tastenbetätigung kurzfristig und schnell eine bekannte, gewünschte Sendung aufzuzeichnen oder wiederzugeben.

## Patentansprüche

1. Aufzeichnungs- und/oder Wiedergabegerät für Audio- und/oder Videosignale mit einem Timer (2,3,4) für Programmwunsch-Aufzeichnungen und/oder -Wiedergabe, der einen ersten Speicher (3) oder Speicherbereich für Timereinstelldaten enthält, die nach entsprechend erfolgter Timeraufzeichnung
- sofern nicht besonders markiert - automatisch gelöscht werden, wobei der erste Speicher (3) oder Speicherbereich eine Mehrzahl von überschreibbaren Speicherplätzen (S1...S8) für unterschiedliche Timereinstelldaten enthalten kann, und
ein zweiter Speicher (6) oder Speicherbereich für Timereinstelldaten vorhanden ist, welcher mindestens einen vom ersten Speicher (3) oder Speicherbereich unabhängigen weiteren überschreibbaren Speicherplatz (A1...An) enthält, wobei die Timereinstelldaten des weiteren Speicherplatzes (An) oder der weiteren Speicherplätze (A1...An) durch eine erste gesonderte Tastenbetätigung insgesamt oder einzeln pro weiteren Speicherplatz (A1...An) ausgewählt und für eine Timeraufzeichnung bereitgestellt werden können, wobei weder bei der Bereitstellung noch nach erfolgter Timeraufzeichnung die Timereinstelldaten des zweiten Speichers (6) oder Speicherbereiches gelöscht werden, und wobei der oder die weiteren Speicherplätze (A1...An) durch eine zweite gesonderte Tastenbetätigung unabhängig vom ersten Speicher (3) oder Speicherbereich einzeln aufrufbar, zur Dateneingabe editierbar, dauerhaft speicherbar und/oder löschbar ist oder sind, wobei die Dateneingabe, Speicher- und Löschfunktionen mit den gleichen Tasten wie beim ersten Speicher (3) oder Speicherbereich erfolgen kann, und wobei die Timereinstelldaten auf einer Anzeige darstellbar sind, und wobei bei Aufruf des mindestens einen weiteren Speicherplatzes (An) durch die erste gesonderte Tastenbetätigung dessen Speicherinhalt (S1...S8) unter Umgehung des ersten Speichers (3) für die Timeraufzeichnung bereitgestellt wird.

2. Aufzeichnungs- und/oder Wiedergabegerät nach Anspruch 1, **dadurch gekennzeichnet, daß** die erste und/oder zweite gesonderte Tastenbetätigung durch Betätigung einer einzelnen Taste oder einer Tastenfolge ausgeführt wird.

3. Aufzeichnungs- und/oder Wiedergabegerät nach Anspruch 1, **dadurch gekennzeichnet, daß** die erste und/oder zweite gesonderte Tastenbetätigung durch Mehrfachfunktion einer vorbestimmten Taste oder einer Mehrzahl vorbestimmter Tasten ausgeführt wird.

4. Aufzeichnungs- und/oder Wiedergabegerät nach einem der vorhergehenden Ansprüche, **dadurch gekennzeichnet, daß** die erste oder die zweite gesonderte Tastenbetätigung eine menüartige Auswahl der Timereinstelldaten erlaubt.

5. Aufzeichnungs- und/oder Wiedergabegerät nach einem der vorhergehenden Ansprüche, **dadurch gekennzeichnet, daß** die selektierte Bereitstellung der Timereinstelldaten des zweiten Speichers (6) durch einen Bestätigungsbefehl eine Timer-Aufzeichnungsbereitschaft auslöst.

6. Aufzeichnungs- und/oder Wiedergabegerät nach einem der vorhergehenden Ansprüche, **dadurch gekennzeichnet, daß** eine Mehrzahl vorhandener weiterer unabhängiger Speicherplätze (A1...An) ausgewählt und zur automatischen Aufzeichnung bereitgestellt werden.

7. Aufzeichnungs- und/oder Wiedergabegerät nach einem der vorhergehenden Ansprüche, **dadurch gekennzeichnet, daß** eine weitere oder längere Betätigung einer Taste aus der gesonderten Tastenfunktion die letzte Bereitstellung von Timereinstelldaten rückgängig macht.

8. Aufzeichnungsgerät nach Anspruch 1, **dadurch gekennzeichnet, daß** bei Aufruf des mindestens einen weiteren Speicherplatzes (An) dessen Timereinstelldaten Priorität vor solchen Timereinstelldaten des ersten Speichers (3) oder Speicherbereiches haben, die nicht aus einem der weiteren Speicherplätze (An) aufgerufen werden.

9. Aufzeichnungsgerät nach einem der vorhergehenden Ansprüche, **dadurch gekennzeichnet, daß** die Timereinstelldaten des zweiten Speichers (6) auf die Tagesangabe oder Datumsangabe verzichten und lediglich Uhrzeiten für die nach Bereitstellung der Einstelldaten folgenden gewählten Sendung aufweisen.

10. Aufzeichnungsgerät nach einem der vorhergehenden Ansprüche, **dadurch gekennzeichnet, daß** die Auswahl und Bereitstellung des unabhängigen Speicherbereiches mit Hilfe der Eingabe der gewünschten Startzeit erfolgt.

11. Aufzeichnungsgerät nach einem der vorhergehenden Ansprüche, **dadurch gekennzeichnet, daß** bei Aktivieren der gesonderten Tastenbetätigung eine Anzeigefunktion ausgelöst wird, die vorbestimmbare alphanumerische Zeichen zur Kenntlichmachung der auswählbaren Timereinstelldaten anzeigt.

## Claims

1. Recording and/or reproducing apparatus for audio and/or video signals, with a timer (2, 3, 4) for recording and/or reproducing desired programs, which timer comprises a first memory (3) or memory region for timer setting data, which are automatically deleted after a corresponding timer recording has been carried out insofar as this is not specially marked, wherein the first memory (3) or memory region can comprise a plurality of storage locations (S1 ... S8), which can be overwritten, for different timer setting data and a second memory (6) or memory region for timer setting data is present and comprises at least one further storage location (A1 ... An), which can be overwritten, independent from the first memory (3) or memory region, wherein the timer setting data of the further storage location (An) or of the further storage locations (A1 ...An) can be selected by a first specific button actuation as a whole or individually per further memory location (A1 ... An) and prepared for a timer recording, wherein the timer setting data of the second memory (6) or memory region are deleted neither in the preparation nor alter a timer recording has been carried out, and wherein the further storage location or further storage locations (A1 ... An) can be individually interrogated by a second specific button actuation independently of the first memory (3) or memory region, edited for data input, permanently stored in and/or deleted from, wherein the data input and storing and deleting functions can be effected with the same buttons as in the case of the first memory (3) or memory region, and wherein the timer setting data can be represented on a display and wherein in the case of interrogation of the at least one further storage location (An) by the first specific button actuation the memory content thereof is, with bypassing of the first memory (3), prepared for the timer recording.

2. Recording and/or reproducing apparatus according to claim 1, **characterised in that** the first and/or second specific button actuation is performed by actuation of an individual button or a button sequence.

3. Recording and/or reproducing apparatus according to claim 1, **characterised in that** the first and/or second specific button actuation is performed by multiple functioning of a predetermined button or a plurality of predetermined buttons.

4. Recording and/or reproducing apparatus according to one of the preceding claims, **characterised in that** the first or the second specific button actuation allows a menu-like selection of the timer setting data.

5. Recording and/or reproducing apparatus according to one of the preceding claims, **characterised in that** the selected preparation of the timer setting data of the second memory (6) triggers, by an acknowledgement command, a timer recording preparation.

6. Recording and/or reproducing apparatus according to one of the preceding claims, **characterised in that** a plurality of further independent storage locations (A1 ... An) which are present are selected and prepared for automatic recording.

7. Recording and/or reproducing apparatus according to one of the preceding claims, **characterised in that** a further or longer actuation of a button from the specific button function effects a cancellation of the last preparation of timer setting data.

8. Recording apparatus according to claim 1, **characterised in that** an interrogation of the at least one further storage location (An) the timer setting data thereof have priority over such timer data of the first memory (3) or memory region which are not called up from one of the further storage locations (An).

9. Recording apparatus according to one of the preceding claims, **characterised in that** the timer setting data of the second memory (6) dispenses with the day indication or date indication and displays merely clock times for the selected transmission following preparation of the setting data.

10. Recording apparatus according to one of the preceding claims, **characterised in that** the selection and preparation of the independent memory region is carried out with the help of the input of the desired start time.

11. Recording reproducing apparatus according to one of the preceding claims, **characterised in that** in the case of activation of the specific button actuation a display function is triggered which displays the predetermined alphanumeric symbol for identification of the selectable timer setting data.

## Revendications

1. Appareil d'enregistrement et/ou de lecture de signaux audio et/ou vidéo muni d'un timer (2, 3, 4) pour des enregistrements et/ou lectures programmés comportant une première mémoire (3) ou domaine de mémoire pour les données de réglage du timer qui sont automatiquement effacées -si elles ne sont pas identifiées différemment- une fois l'enregistrement programmé effectué, dans lequel la première mémoire (3) ou le domaine de mémoire peut comporter plusieurs emplacements de mémoire réinscriptibles (S1...S8) pour différentes données de réglage du timer et une deuxième mémoire (6) ou domaine de mémoire pour les données de réglage du timer qui comporte au moins un emplacement mémoire réinscriptible supplémentaire indépendant de la première mémoire (3) ou domaine de mémoire, dans laquelle les données de réglage du timer de l'emplacement mémoire supplémentaire (An) ou des emplacements mémoire supplémentaires (A1...An) peuvent être sélectionnées ensemble ou individuellement par une première pression distincte de touche par emplacement mémoire supplémentaire (A1..An) et peuvent être affectées à un enregistrement programmé, et dans laquelle les données de réglage du timer de la deuxième mémoire (6) ou domaine de mémoire ne sont effacées ni lors de l'affectation ni une fois l'enregistrement terminé, et dans laquelle l'emplacement ou les emplacements mémoire supplémentaires (A1...An) peuvent être appelés individuellement par une deuxième pression distincte de touche indépendamment de la première mémoire (3) ou du domaine de mémoire, peuvent être édités pour l'entrée de données, peuvent être sauvegardés et/ou effacés de manière durable dans laquelle l'entrée de données, les fonctions de sauvegarde et d'effacement peuvent être appelées avec les mêmes touches que pour la première mémoire (3) ou domaine de mémoire, et dans laquelle les données de réglage du timer peuvent être affichées sur un écran, et dans laquelle, lors de l'appel d' au moins un emplacement mémoire supplémentaire (An) par la première pression distincte de touche, son contenu (S1...S8) est affecté à l'enregistrement programmé grâce à la dérivation de la première mémoire (3).

2. Appareil d'enregistrement et/ou de lecture selon la revendication 1 ou 2, **caractérisé en ce que** la première et/ou la deuxième pression distincte de touche est effectuée par la pression sur une seule touche ou sur une série de touches.

3. Appareil d'enregistrement et/ou de lecture selon la revendication 1 ou 2, **caractérisé en ce que** la première et/ou la deuxième pression distincte de touche est effectuée par la fonction multiple d'une ou plusieurs touches déterminées.

4. Appareil d'enregistrement et/ou de lecture selon une des revendications précédentes, **caractérisé en ce que** la première ou la deuxième pression distincte de touche permet la sélection dans un menu des données de réglage du timer.

5. Appareil d'enregistrement et/ou de lecture selon une des revendications précédentes, **caractérisé en ce que** l'affectation sélectionnée des données de réglage du timer de la deuxième mémoire (6) déclenche une affectation d'enregistrement programmé grâce à une commande de confirmation.

6. Appareil d'enregistrement et/ou de lecture selon une des revendications précédentes, **caractérisé en ce que** plusieurs emplacements de mémoire (A1...An) indépendants supplémentaires sont sélectionnés et affectés à l'enregistrement automatique.

7. Appareil d'enregistrement et/ou de lecture selon une des revendications précédentes, **caractérisé en ce qu'**une pression supplémentaire ou plus longue d'une touche, à partir de la fonction particulière de la touche, annule la dernière affectation des données de réglage du timer.

8. Appareil d'enregistrement selon la revendication 1 ou 2, **caractérisé en ce que**, lors de l'appel d'au moins un emplacement de mémoire supplémentaire (An), ses données de réglage du timer ont priorité sur les données de réglage du timer de la première mémoire (3) ou du domaine de mémoire, qui n'ont pas été appelées é partir d'un des emplacements de mémoire supplémentaires (An).

9. Appareil d'enregistrement selon une des revendications précédentes, **caractérisé en ce que** les données de réglage du timer de la deuxième mémoire (6) ne comportent pas l'indication du jour ou de la date et comportent seulement l'heure de l'émission choisie suivant l'affectation des données de réglage.

10. Appareil' d'enregistrement selon une des revendications précédentes, **caractérisé en ce que** la sélection et l'affectation du domaine de mémoire indépendant sont effectuées grâce à l'entrée de l'heure de démarrage souhaitée.

11. Appareil d'enregistrement selon une des revendications précédentes, **caractérisé en ce que**, l'activation de la pression distincte de touche déclenche une fonction d'affichage qui affiche des caractères alphanumériques pouvant être déterminés à l'avance pour la visualisation des données de réglage du timer pouvant être sélectionnées.
